# EUROPÄISCHE PATENTSCHRIFT

(11) **EP 3 420 803 B1**
(45) Veröffentlichungstag und Bekanntmachung des Hinweises auf die Patenterteilung: **29.07.2020**
(21) Anmeldenummer: 18176563.7
(22) Anmeldetag: 07.06.2018
(51) Int. Cl.: A01F 12/24

(54) **DRESCH- ODER SEPARIERKORB FÜR DIE GETREIDEERNTE**
THRESHING OR SEPARATING CONCAVE FOR GRAIN HARVESTING
ELEMENT DE SÉPARATION OU DE BATTAGE POUR LES RÉCOLTES CÉRÉALIÈRES

(30) Priorität: 26.06.2017 DE 102017210710
(43) Veröffentlichungstag der Anmeldung: 02.01.2019
(73) Patentinhaber: Deere & Company, Moline, IL 61265 (US)
(72) Erfinder: Lauer, Friedrich, 68163 Mannheim (DE)
(74) Vertreter: Holst, Sönke

(56) Entgegenhaltungen:
- EP-A1- 3 028 560
- EP-A1- 3 103 322
- DE-C- 519 105
- DE-U1-202017 102 477

## Beschreibung

Die Erfindung betrifft einen Dresch- oder Separierkorb für die Getreideernte, mit bogenförmigen Wangen, zwischen denen sich ein langgestrecktes Querschnittsprofil aufweisende Korbleisten erstrecken, deren bogeninneren Enden abgerundet sind und mit sich in Bogenrichtung erstreckenden Korbdrähten, welche sich durch Öffnungen in den Korbleisten erstrecken, ein Dreschwerk und einen Mähdrescher mit einem derartigen Dresch- oder Separierkorb.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Zum Dreschen dienen in der Regel Tangentialdrescheinrichtungen mit einem Dreschkorb und einer das Erntegut tangential fördernden Dreschtrommel oder das Erntegut axial fördernde Axialdrescheinrichtungen mit Axialdreschrotoren, die ebenfalls mit einem Dreschkorb zusammenwirken. Der Dreschkorb umgibt die Dreschtrommel bzw. den Axialdreschrotor über einen Teil ihres oder seines Umfangs und schließt mit ihr oder ihm einen Spalt ein, durch den das zu dreschende Erntegut gezwängt wird. Während das Erntegut durch den Spalt gefördert wird, scheiden sich Erntegutteile (das Korn) ab, fallen durch die Zwischenräume und werden einer Reinigungseinrichtung zugeführt. Auf analoge Weise kann das Erntegut nach dem Dreschen mittels einer tangential arbeitenden Separiertrommel oder einem rückwärtigen Abschnitt einer Axialdrescheinrichtung oder einem einer Tangentialdreschtrommel nachgeordneten Trennrotor und einem damit zusammenwirkenden Separierkorb bearbeitet werden, um noch verbleibendes Korn aus der Erntegutmatte herauszulösen.

Die Dreschkörbe setzen sich üblicherweise aus sich in Umfangsrichtung der Dreschtrommel erstreckenden, äußeren Wangen und parallel dazwischen angeordneten Bogenleisten sowie dazu orthogonalen, axialen Korbleisten zusammen, die zwischen sich Zwischenräume belassen, in denen sich parallel zu den Bogenleisten orientierte Korbdrähte befinden. Die Korbdrähte erstrecken sich durch Löcher (Bohrungen) in den Korbleisten. Die Korbleisten haben rechteckige Querschnitte.

Beispielsweise zeigt die DE 100 27 450 A1 einen derartigen Dreschkorb für die Getreideernte mit rechteckigen, axialen Korbleisten und kreisrunden, tangentialen

Korbdrähten. In der EP 3 103 322 A1 ist ein derartiger Dreschkorb gezeigt, bei dem die vorlaufenden Kanten der Korbleisten mit dünneren Strichen als die rücklaufenden Kanten gezeichnet sind. Der Abstand zwischen den Korbdrähten und den radial inneren Flächen der Korblisten ist größer als der Durchmesser der Korbdrähte.

Die DE 33 03 413 A1 zeigt einen Dreschkorb für die Maisernte mit Korbleisten mit einem kreisförmigen Querschnitt.

In der FR 2 612 216 A1 wird ein anderer Dreschkorb gezeigt, der sowohl für die Maisernte wie für die Getreideernte verwendbar sein soll. Er umfasst kreiszylindrische Korbleisten, die am stromab liegenden Ende mit gelochten Platten verbunden sind. Die Korbleisten sind um ihre Längsachsen drehbar, sodass die Platten für die Maisernte nach unten abklappbar und für die Getreideernte in eine tangentiale Ausrichtung verbringbar sind.

Die DE 20 2017 102 477 U1 beschreibt einen Dreschkorb, bei dem die einen rechteckigen oder runden Querschnitt aufweisenden Korbleisten und die Korbdrähte an der der Dreschtrommel zugewandten Innenseite bündig abschließen. Dazu sind die Korbdrähte in Vertiefungen der Korbleisten angeordnet, was die Stabilität des Dreschkorbs in Frage stellt.

Letztlich zeigt die DE 519 105 A einen Dreschkorb für Schlagleisten-Dreschmaschinen mit schräg zur Abwurfrichtung der ausgedroschenen Körner angeordneten Korbleisten. Die der Dreschtrommel zugewandten Endbereiche der Korbleisten sind keilförmig und umfassen eine abgerundete, innere Kante. Es können sich in Umfangsrichtung verlaufende Korbdrähte Verwendung finden, die zur mechanischen Fixierung der Korbleisten dienen und einen relativ großen Abstand von den inneren Kanten der Korbleisten aufweisen.

### Aufgabe

Im Stand der Technik sind die sich axial, quer zur Gutflussrichtung erstreckenden Korbleisten bei Dreschkörben für die Getreideernte üblicherweise rechteckigen Querschnitts und weisen demnach flache, in Erntegutflussrichtung vorlaufende Oberflächen auf, um eine aggressive Dreschwirkung bereitzustellen. Die Separierkörbe sind in der Regel ebenfalls mit rechteckigen Korbleisten ausgestattet (DE 10 2012 210 649 A1). Die eckigen Korbleisten führen in Verbindung mit den in relativ großem Abstand darunter angeordneten Korbdrähten dazu, dass die Korbleisten dem Erntegutfluss einen relativ großen Widerstand entgegen setzen. Dadurch bewegt sich die Erntegutmatte relativ langsam entlang des Dreschspalts, was zu einer nicht immer befriedigenden Abscheidewirkung des Dresch- oder Separierkorbs führt. Zudem beschädigen die eckigen Korbleisten das Stroh.

Der oben zitierte Dreschkorb nach DE 33 03 413 A1 ist explizit nicht für die Ernte von Getreide - d.h. kleineren Körnern - geeignet, was man auch an den fehlenden, sich axial erstreckenden Korbdrähten erkennt. Die kreiszylindrische Form der Korbleisten nach FR 2 612 216 A1 ist ebenfalls dadurch bedingt, dass dieser Dreschkorb auch für Mais verwendet werden soll; zudem fehlen dort Korbdrähte, da ihre Funktion durch die gelochten Platten übernommen wird. Das kreisförmige Profil der Korbleisten nach DE 33 03 413 A1 und FR 2 612 216 A1 hat weiterhin den Nachteil, dass diese Korbleisten einen relativ großen Durchmesser aufweisen müssen, um hinreichend stabil zu sein, was aber die Dreschwirkung bei Getreide verschlechtert.

Auch der Dreschkorb nach DE 519 105 A kann das Problem, dass die Korbleisten dem Erntegutfluss einen relativ großen Widerstand entgegen setzen, nicht befriedigend lösen, denn dort sind die Korbdrähte in großem Abstand zu den inneren Enden der Korbleisten angeordnet.

Die der Erfindung zu Grunde liegende Aufgabe wird darin gesehen, einen Dresch- oder Separierkorb, ein Dreschwerk und einen Mähdrescher mit einem derartigen Dresch- oder Separierkorb bereitzustellen, der oder das die erwähnten Nachteile nicht oder in vermindertem Ausmaß aufweist.

### Erfindung

Die vorliegende Erfindung wird durch die Patentansprüche definiert.

Ein für die Getreideernte (d.h. zur Ernte kleiner Körner, wie Weizen, Gerste, Roggen, Dinkel etc.) geeigneter Dresch- oder Separierkorb ist mit bogenförmigen, in sich gekrümmten Wangen ausgestattet, deren Krümmung an den Radius der Dresch- oder Separiertrommel angepasst ist, mit welcher der Dresch- oder Separierkorb gemeinsam verwendet werden soll. Zwischen den Wangen erstrecken sich ein langgestrecktes Querschnittsprofil aufweisende Korbleisten, sei es orthogonal zu den Wangen oder in einem stumpfen Winkel dazu. Die bogeninneren (d.h. der Dresch- oder Separiertrommel benachbarten) Enden der Korbleisten sind abgerundet. Sich in Bogenrichtung erstreckende Korbdrähte erstrecken sich durch Öffnungen in den Korbleisten, die der Abrundung der Korbleisten unmittelbar benachbart sind und die Abrundungen schließen sich nach innen direkt an die Öffnungen der Korbleisten an.

Auf diese Weise vermeidet man die eingangs erwähnten Nachteile des Standes der Technik. Durch die am bogeninneren Ende gerundeten Korbleisten wird der Widerstand der Korboberfläche in Verbindung mit den hochgesetzten, den bogeninneren Enden der Korbleisten direkt benachbarten Korbdrähten gegenüber der Strohmatte, die sich zwischen Korboberfläche und Dresch- oder Separiertrommel bewegt, entscheidend verringert. Das hat zur Folge, dass die Gutgeschwindigkeit infolge des geringeren Widerstandes bei gleicher Trommeldrehzahl im Vergleich zu einem herkömmlichen Dresch- oder Separierkorb ansteigt. Dies hat eine höhere Abscheidung zur Folge. Die gerundeten Korbleisten wirken sich zusätzlich positiv auf die Strohqualität aus. Die ein langgestrecktes Querschnittsprofil aufweisende Korbleisten sind stabiler als zylindrische Korbleisten.

Die Korbdrähte können sich parallel zu den Wangen oder in einem spitzen Winkel zu den Wangen und/oder quer zu den Korbleisten oder in einem stumpfen Winkel dazu erstrecken.

Der Radius der abgerundeten Enden der Korbleisten kann der Hälfte der in Bogenrichtung gemessenen Materialstärke der (abgesehen von den abgerundeten Enden) mit rechteckigem Querschnittsprofil versehenen Korbleisten entsprechen.

Der Dresch- oder Separierkorb kann an einem Dreschwerk, insbesondere einem Tangentialdreschwerk verwendet werden, welches mit einer Dreschtrommel oder einem Tangentialseparator und dem damit zusammenwirkenden Dresch- oder Separierkorb ausgestattet ist. Er könnte jedoch auch an einem Axialdresch- und/oder -trennrotor benutzt werden.

### Ausführunasbeispiel

In den Zeichnungen ist ein nachfolgend näher beschriebenes Ausführungsbeispiel der Erfindung dargestellt, wobei die Bezugszeichen nicht zu einer einschränkenden Auslegung heranzuziehen sind. Es zeigt:
- Fig. 1: eine schematische seitliche Ansicht eines Mähdreschers mit einem Mehrtrommeldreschwerk,
- Fig. 2: eine perspektivische Ansicht des Separierkorbs des Tangentialdreschwerks des Mähdreschers der Figur 1, und
- Fig. 3: einen vergrößerten Ausschnitt aus der Figur 2.

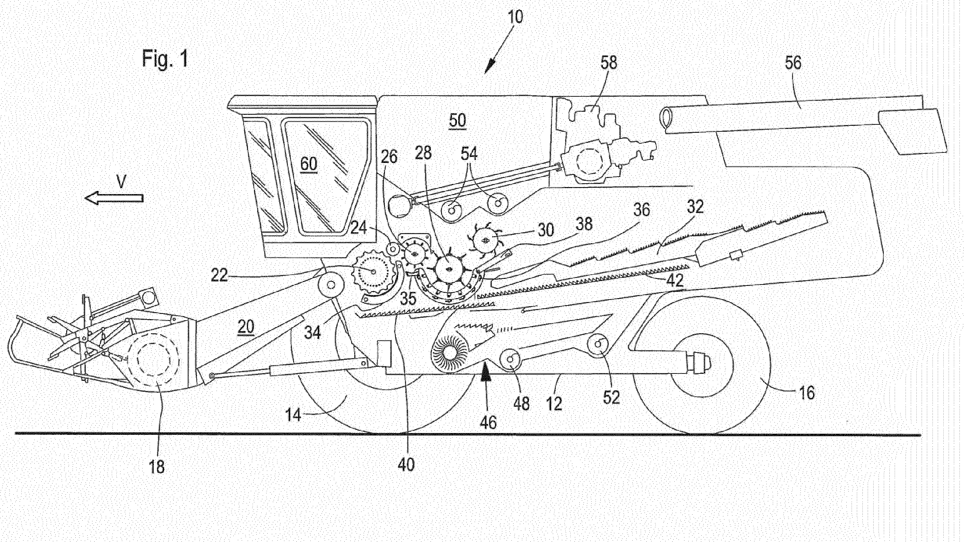

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 44 angeordnet, während sich oberhalb der Fördertrommel 26 eine fest stehende Abdeckung und unterhalb des Tangentialseparators 28 ein Separierkorb 36 befindet. Unterhalb der Wendetrommel 30 ist ein Fingerrechen 38 angeordnet, der auch entfallen könnte.

Das durch den Dreschkorb 34, den Separierkorb 36 und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden.

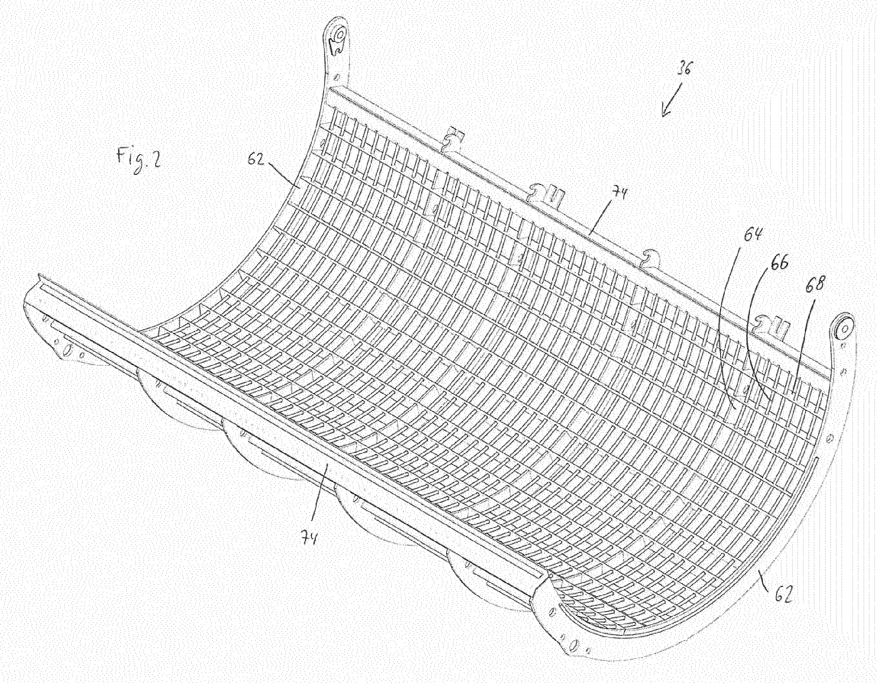

Die Figur 2 zeigt eine perspektivische Ansicht des Separierkorbs 36 von vorn und schräg oben her betrachtet. Dieser oder ein ähnlicher Separierkorb 36 könnte auch als Dreschkorb 34 verwendet werden. Der in der Gutflussrichtung konkav geformte Separierkorb 36 umfasst seitliche, bogenförmige Wangen 62, die parallel zueinander orientiert und voneinander beabstandet sind. Zwischen den durch endseitige Querstreben 74 verbundenen Wangen 62 sind Bogenleisten 64 verteilt, die ebenfalls parallel zueinander und zu den Wangen 62 orientiert und voneinander beabstandet sind. Quer zu den Wangen 62 und Bogenleisten 64, d. h. sich in axialer Richtung des Separierkorbs 36 erstreckend, sind Korbleisten 68 vorgesehen. Die Flussrichtung des Ernteguts ist in der Figur 2 von links unten nach rechts oben gerichtet. Die Wangen 62 und die Bogenleisten 64 bilden gemeinsam mit den fest am Dreschkorb angebrachten Korbleisten 68 eine tragende Struktur des Separierkorbs 36. Richtungsangaben zum Separierkorb 36, wie tangential, axial und radial, beziehen sich auf den Tangentialseparator 28 und die mit dessen Radius zusammenfallende Symmetrieachse des konkav gekrümmten Separierkorbs 36. Die Gutflussrichtung entspricht der (tangentialen) Umfangsrichtung des Tangentialseparators 28 und des Separierkorbs 36.

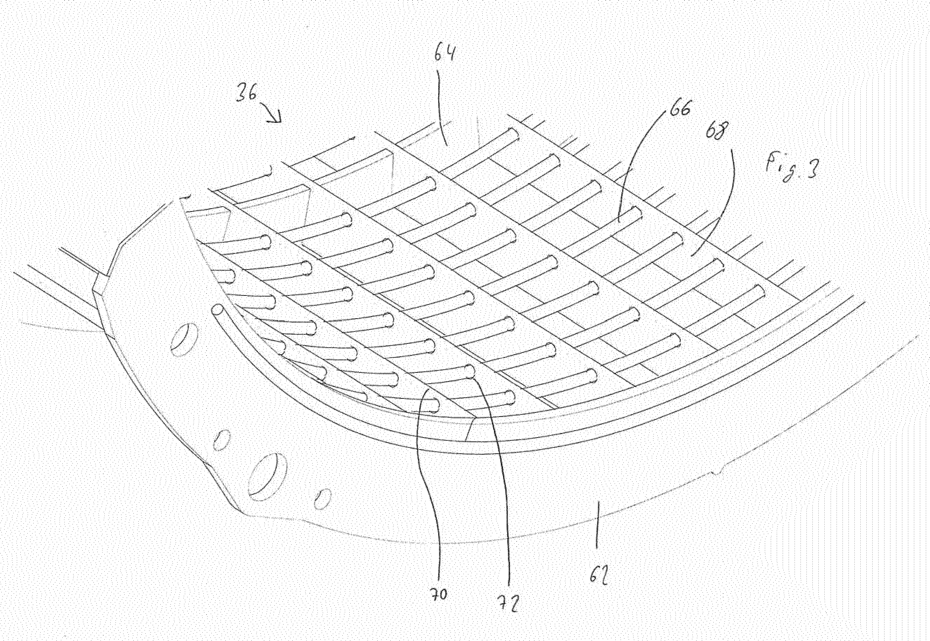

Parallel zu den Wangen 62 und den Bogenleisten 64 erstrecken sich Korbdrähte 66, die durch Öffnungen 72 (Bohrungen) in den Korbleisten 68 hindurchgeführt sind, wie man am besten anhand der Figur 3 erkennt.

Die Korbleisten 68 weisen in an sich bekannter Weise ein rechteckiges Querschnittsprofil auf, dessen längere Abmessung sich etwa radial zum Tangentialseparator 28 erstreckt, jedoch ggf. auch demgegenüber um die Längsachse der Korbleisten 68 in Drehrichtung des Tangentialseparators 28 oder ihr entgegen abgewinkelt sein könnte. Am bogeninneren (d.h. dem Tangentialseparator 28 benachbarten) Ende sind die Korbleisten 68 hingegen mit einer halbkreisförmigen Abrundung 70 versehen, deren Radius der halben in tangentialer Richtung gemessenen Abmessung der Korbleisten 68 (d.h. der kürzeren Abmessung des rechteckigen Querschnittsprofils der Korbleisten 68) entspricht. Am inneren Ende gehen die Korbleisten 68 demnach ohne Kante oder Absatz in die Abrundung 70 über. Es wäre denkbar, die bezüglich des Erntegutflusses rückwärtige Hälfte der Abrundung 70 entfallen zu lassen, d.h. dort einen rechten Winkel vorzusehen. Die bogeninneren (oberen) Enden der Öffnungen 72 liegen genau dort, wo die in sich flachen, vorlaufenden Bereiche der Korbleisten 68 in die Abrundung 70 übergehen.

Der vorliegende Separierkorb 36 weist somit durch die Abrundungen 70 und die ihr unmittelbar benachbarten Öffnungen 72 für die Korbdrähte 66 eine relativ glatte Oberfläche auf, die dem Erntegutfluss nur wenig mechanischen Widerstand entgegen setzt, was die Abscheidungswirkung des Separierkorbs 76 verbessert.

## Patentansprüche

1. Dresch- oder Separierkorb (36) für die Getreideernte, mit bogenförmigen Wangen (62), zwischen denen sich ein langgestrecktes Querschnittsprofil aufweisende Korbleisten (68) erstrecken, deren bogeninneren Enden mit einer Abrundung (70) versehen sind und mit sich in Bogenrichtung erstreckenden Korbdrähten (66), welche sich durch Öffnungen (72) in den Korbleisten (68) erstrecken, **dadurch gekennzeichnet, dass** die Öffnungen (72) den Abrundungen (70) unmittelbar benachbart sind und sich die Abrundungen (70) direkt an die Öffnungen (72) anschließen.

2. Dresch- oder Separierkorb (36) nach Anspruch 1, wobei die Korbleisten (68) sich quer zu den Wangen (62) oder im stumpfen Winkel dazu erstrecken.

3. Dresch- oder Separierkorb (36) nach einem der Ansprüche 1 oder 2, wobei die Korbdrähte (66) sich parallel zu den Wangen (62) oder in einem spitzen Winkel zu den Wangen und/oder quer zu den Korbleisten (68) oder in einem stumpfen Winkel dazu erstrecken.

4. Dresch- oder Separierkorb (36) nach einem der Ansprüche 1 bis 3, wobei der Radius der Abrundungen (70) der Hälfte der in Bogenrichtung gemessenen Materialstärke der mit einem rechteckigem Querschnittsprofil versehenen Korbleisten (68) entspricht.

5. Dreschwerk, insbesondere Tangentialdreschwerk, mit einer Dreschtrommel (22) oder einem Tangentialseparator (28) und einem damit zusammenwirkenden Dresch- oder Separierkorb (36) nach einem der vorhergehenden Ansprüche.

6. Mähdrescher (10) mit einem Dreschwerk nach Anspruch 5.

## Claims

1. Threshing or separating concave (36) for grain harvesting, having curved side members (62) between which concave bars (68) having an elongate cross-sectional profile extend, the ends of which concave bars that are on the inside of the curve are provided with a rounding (70) and with concave wires (66) which extend in the direction of the curve and extend through openings (72) in the concave bars (68), **characterized in that** the openings (72) are directly adjacent to the roundings (70) and the roundings (70) directly adjoin the openings (72).

2. Threshing or separating concave (36) according to Claim 1, wherein the concave bars (68) extend transversely with respect to the side members (62) or at an obtuse angle thereto.

3. Threshing or separating concave (36) according to either of Claims 1 and 2, wherein the concave wires (66) extend parallel to the side members (62) or at an acute angle with respect to the side members and/or transversely with respect to the concave bars (68) or at an obtuse angle with respect thereto.

4. Threshing or separating concave (36) according to one of Claims 1 to 3, wherein the radius of the roundings (70) corresponds to half of the material thickness, as measured in the direction of the curve, of the concave bars (68) which are provided with a rectangular cross-sectional profile.

5. Threshing unit, in particular tangential threshing unit, with a threshing drum (22) or a tangential separator (28) and a threshing or separating concave (36) interacting therewith according to one of the preceding claims.

6. Combine harvester (10) having a threshing unit according to Claim 5.

## Revendications

1. Panier de séparation ou de battage (36) pour les récoltes céréalières, comprenant des joues de forme arquée (62) entre lesquelles s'étendent des baguettes de panier (68) présentant un profil en section transversale allongé, dont les extrémités intérieures à l'arc sont pourvues d'un arrondi (70) et comprenant des câbles de panier (66) s'étendant dans la direction de l'arc, qui s'étendent à travers des ouvertures (72) dans les baguettes de panier (68), **caractérisé en ce que** les ouvertures (72) sont directement adjacentes aux arrondis (70) et les arrondis (70) se raccordent directement aux ouvertures (72).

2. Panier de séparation ou de battage (36) selon la revendication 1, dans lequel les baguettes de panier (68) s'étendent transversalement aux joues (62) ou suivant un angle obtus par rapport à celles-ci.

3. Panier de séparation ou de battage (36) selon la revendication 1 ou 2, dans lequel les câbles de panier (66) s'étendent parallèlement aux joues (62) ou suivant un angle aigu par rapport aux joues et/ou transversalement aux baguettes de panier (68) ou suivant un angle obtus par rapport à celles-ci.

4. Panier de séparation ou de battage (36) selon l'une quelconque des revendications 1 à 3, dans lequel le rayon des arrondis (70) correspond à la moitié de l'épaisseur de matériau, mesurée dans la direction de l'arc, des baguettes de panier (68) pourvues d'un profil en section transversale rectangulaire.

5. Système de battage, en particulier système de battage tangentiel, comprenant un tambour de battage (22) ou un séparateur tangentiel (28) et un panier de séparation ou de battage (36) selon l'une quelconque des revendications précédentes coopérant avec celui-ci.

6. Moissonneuse-batteuse (10) comprenant un système de battage selon la revendication 5.
